# EUROPÄISCHE PATENTSCHRIFT

(11) **EP 1 351 789 B1**
(45) Veröffentlichungstag und Bekanntmachung des Hinweises auf die Patenterteilung: **07.12.2005**
(21) Anmeldenummer: 02718006.6
(22) Anmeldetag: 02.01.2002
(51) Int. Cl.: B23B 51/04

(54) **WECHSELHALTER FÜR HOHLBOHRER**
INTERCHANGEABLE HOLDER FOR HOLLOW DRILLS
SUPPORT VARIABLE POUR MECHES CREUSES

(30) Priorität: 03.01.2001 DE 10100027
(43) Veröffentlichungstag der Anmeldung: 15.10.2003
(73) Patentinhaber: Schweiger, Bernd, 81241 München (DE)
(72) Erfinder: STEER, Peter, 80686 München (DE)
(74) Vertreter: Konnerth, Dieter Hans
(86) Internationale Anmeldenummer: PCT/EP2002/000004
(87) Internationale Veröffentlichungsnummer: WO 2002/062512

(56) Entgegenhaltungen:
- DE-A- 19 818 284
- US-A- 4 303 357

## Beschreibung

Die Erfindung betrifft einen Wechselhalter für Hohlbohrer, enthaltend ein Trägerteil zum stirnseitigen Aufnehmen eines Basisendes eines Bohrrohres des Hohlbohrers und eine Halteeinrichtung für einen Halteeingriff des Trägerteils an zugeordneten Ausnehmungen, die in der Wand des Bohrrohres an seinem Basisende ausgebildet sind.

Die Erfindung betrifft des weiteren einen Hohlbohrer zum Festlegen an einem Wechselhalter, wobei ein Bohrrohr des Hohlbohrers an einem einer Bohrspitze gegenüberliegenden Basisende Ausnehmungen zum Herstellen eines bajonettartigen Halteeingriffs mit einer Halteeinrichtung des Wechselhalters aufweist und jede Ausnehmung einen Eintrittsabschnitt für die Halteeinrichtung aufweist.

Aus der DE 198 18 284 A1 ist ein Kemschneidewerkzeug für Mauerwerk mit einem Wechselhalter bekannt, der eine Trägerscheibe mit einem zentralen hohlen Zapfen aufweist, der an einer in einem Bohrfutter einspannbaren Hohlwelle zum Antreiben der Trägerscheibe festlegbar ist. Die Trägerscheibe enthält an ihrer dem Zapfen gegenüberliegenden und zur Drehachse senkrechten Stirnseite, die eine Anlagefläche für ein Hohlrohr des Kemschneidewerkzeugs bildet, eine äußere ringförmige Wand, die am Umfang der Trägerscheibe angeordnet ist, eine mittlere ringförmige Wand, die in geringem Abstand von der äußeren Wand angeordnet ist, und eine innere ringförmige Wand. Drei Haltestifte verlaufen radial von der inneren Wand durch die mittlere Wand zur äußeren Wand, wobei sie von der Stirnseite beabstandet und um jeweils 120° gegeneinander versetzt angeordnet sind. Das Hohlrohr enthält an seinem den Schneidzähnen gegenüberliegenden Basisende drei L-förmige Schlitze, die am Umfang des Hohlrohres um 120° versetzt angeordnet sind und mit den Haltestiften des an die Stirnseite der Trägerscheibe angelegten Hohlrohres einen Bajonettverschluß bilden. Dabei grenzt die Innenseite des Hohlrohres unmittelbar an die Außenseite der mittleren ringförmigen Wand an und die von den L-förmigen Schlitzen gebildeten Laschen drücken federnd gegen die Außenseite der mittleren ringförmigen Wand, so daß das Hohlrohr zentral auf der Trägerscheibe gehalten wird. An der Lasche kann ein Vorsprung gebildet sein, der in eine zugeordnete Vertiefung in der Außenseite der mittleren ringförmigen Wand eingreifen und damit eine Verriegelung des Hohlrohres an der Trägerscheibe bilden kann. Dieses Kernschneidewerkzeug ist zur Aufnahme eines Hohlrohres eines bestimmten Durchmessers vorgesehen, das die mittlere ringförmige Wand unmittelbar übergreift. Die Aufnahme von Hohlrohren mit innerhalb eines Bereichs beliebigen unterschiedlichen Durchmessern ist nicht vorgesehen und durch die Art der Verriegelung der Laschen, die ein unmittelbares Anlegen an die Außenseite der mittleren ringförmigen Wand erfordern, auch nicht ausführbar.

Aufgabe der Erfindung ist es, einen eingangs genannten Wechselhalter zu schaffen, der eine einfache zentrierende Befestigung von Bohrrohren von Bohr- oder Schneidwerkzeugen auch mit unterschiedlichen Durchmessern gestattet, sowie einen Hohlbohrer für diesen Wechselhalter zu schaffen.

Diese Aufgabe wird bei dem oben genannten Wechselhalter erfindungsgemäß dadurch gelöst, daß das Trägerteil einen stirnseitigen ringförmigen Anlagebereich zum Aufnehmen von Bohrrohren mit unterschiedlichen Durchmessern aufweist und daß eine Riegeleinrichtung vorgesehen ist, die zusammen mit der Halteeinrichtung über die Breite des ringförmigen Anlagebereichs wirksam ist, um das jeweilige an dem Anlagebereich angelegte und von der Halteeinrichtung gehaltene Bohrrohr in zentrierter Stellung verriegelt zu halten. Diese Gestaltung ermöglicht es, daß an dem Wechselhalter Bohrrohre mit unterschiedlichen Durchmessern lösbar angebracht werden können, wobei die Bohrrohre an ihren hinteren Verbindungs- oder Basisenden statt aufwendigen Kupplungs- oder Adapterteilen oder dergleichen lediglich in der Wand gebildete Ausnehmungen für den Eingriff mit der Halteeinrichtung benötigen. Damit ist ein derartiges Bohrrohr kostengünstiger herstellbar. Des weiteren ist ein solcher Wechselhalter für einen größeren Bereich von Bohrdurchmessern und Bohrrohrdurchmessern verwendbar. Durch die an dem Trägerteil vorgesehene Riegeleinrichtung können Bohrrohre mit innerhalb des zulässigen Bereichs beliebigen Durchmessern zentriert und verriegelt gehalten werden. Der Wechselhalter eignet sich generell für jede Art von Bohr- und Schneidwerkzeugen, wobei unter den Begriff Hohlbohrer z. B. auch Lochsägen fallen sollen.

Vorteilhafte Ausgestaltungen der Erfindung sind in den Unteransprüchen angegeben.

Eine einfache Gestaltung sieht vor, daß die Halteeinrichtung zumindest zwei und insbesondere drei in etwa radial angeordnete Haltestifte zum bajonettartigen Halteeingriff in den zugeordneten Ausnehmungen am Basisende des Bohrrohres aufweist. Bei zwei auf einer Geraden angeordneten Haltestiften muß das Bohrrohr beim Festlegen separat zentriert werden. Bei drei Stiften, die radial zu einer Rotationsachse und insbesondere unter gleichem Abstand von 120° zueinander angeordnet sind, erfolgt die Zentrierung zwangsläufig beim Ansetzen des Bohrrohres an die Halteeinrichtung bzw. die Haltestifte. Jedoch können auch mehr als drei Haltestifte oder Elemente der Halteeinrichtung vorgesehen sein, die eine zentrierende Festlegung des Bohrrohres gestatten.

Zweckmäßigerweise enthält die Riegeleinrichtung für jeden Haltestift einen bewegbaren Riegelzahn, wobei die Riegelzähne zum Verriegeln des von den Haltestiften gehaltenen Bohrrohres in die Ausnehmungen ausfahrbar sind. Durch die in den Ausnehmungen angeordneten Riegelzähne wird verhindert, daß sich das Bohrrohr gegenüber den Haltestiften verdrehen kann. Auf diese Weise ist das Bohrrohr sicher festgelegt. Die Riegelzähne sind beispielsweise als Platten gebildet.

Bevorzugt ist jeder Riegelzahn derart gebildet, daß er sich in etwa über die freie Länge des Haltestiftes erstreckt und durch eine in der Anlagefläche des Trägerteils gebildete schlitzförmige Öffnung in axialer Richtung in eine an den Haltestift angrenzende Position ausfahrbar ist. Die Breite der Öffnung ist derart gebildet, daß der Riegelzahn nahezu spielfrei in der Öffnung geführt ist. Andererseits kann die Öffnung breiter als ein Schaft des Riegelzahnes sein, so daß der Riegelzahn mit derartigem Spiel in der Öffnung verschiebbar ist, daß er sich durch feines Bohrmaterial nicht festklemmen kann.

Wenn der ringförmige Anlagebereich bzw. die ringförmige stirnseitige Anlagefläche des Trägerteils von einer Außenbegrenzung und einer Innenbegrenzung begrenzt ist, können die Haltestifte jeweils an der Außenbegrenzung und der Innenbegrenzung gelagert sein und jeder Riegelzahn erstreckt sich in einer zu seinem Haltestift parallel versetzten Anordnung in etwa über die freie, für die Halteeinrichtung wirksame Länge des Haltestiftes.

Die Riegelzähne können einzeln verschiebbar gelagert sein. Bevorzugt enthält jedoch der Wechselhalter einen auf einer zentralen Welle des Trägerteils axial verschiebbar gelagerten Riegelträger, der die Riegeleinrichtung bzw. die axial vorstehenden Riegelzähne enthält. Somit wird die Handhabung des Wechselhalters erleichtert.

Dieser Riegelträger ist zweckmäßigerweise gegen das Trägerteil in Riegelstellung elastisch vorgespannt, so daß z. B. durch eine Federkraft das Verriegeln erleichtert wird.

Wenn jeder Riegelzahn zu seiner Stirnseite hin abgerundet oder abgeschrägt ist, findet der Riegelzahn in einfacher Weise seinen Riegeleingriff.

Die Bewegung in den Riegeleingriff wird noch weiter unterstützt, wenn jede Ausnehmung am Bohrrohr einen Eintrittsabschnitt für den Haltestift und den Riegelzahn aufweist und wenn der Eintrittsabschnitt zumindest einen zur Bewegungsrichtung des Riegelzahnes geneigten Seitenrand aufweist, der im Sinne einer trichterartigen Führung wirkt.

Zweckmäßigerweise ist jeder Haltestift in dem Trägerteil bzw. in der Innenbegrenzung und in der Außenbegrenzung in zugeordneten Bohrungen festsitzend aufgenommen. Um eine Demontage des Haltestiftes von dem Trägerteil zu erleichtern, kann vorgesehen sein, daß für jeden Haltestift koaxiale Durchgangsbohrungen in einem gegenüberliegenden Abschnitt des Trägerteils gebildet sind, durch die mittels eines Domes der fest in seinen Lagerbohrungen sitzende Haltestift ausgeschlagen werden kann.

Um zu verhindern, daß die geöffnete Riegeleinrichtung ungewollt unter großer Federkraft der Spannfeder einriegelt, bevor ein Bohrrohr angebracht ist, kann eine Rasteinrichtung zum Festlegen des geöffneten Riegelträgers an dem Trägerteil in einer Raststellung vorgesehen sein.

Um das Auswechseln und Festlegen unterschiedlicher Bohrrohre zu erleichtern, ist bei einem oben genannten Hohlbohrer erfindungsgemäß vorgesehen, daß der Eintrittsabschnitt zumindest einen zur Rotationsachse geneigten und insbesondere abgeschrägten und/oder abgerundeten Seitenrand aufweist. Der geneigte Seitenrand unterstützt das Einführen der Riegeleinrichtung in den Eintrittsabschnitt, wenn das Bohrrohr beim Ansetzen an den Wechselhalter nicht schon exakt ausgerichtet ist. Der geneigte Seitenrand bietet eine trichterartige Unterstützung, die durch eine Gestaltung mit zwei an dem Eintrittsabschnitt sich gegenüberliegenden geneigten oder abgeschrägten Seitenränder noch verbessert ist. Zweckmäßigerweise enthält der Eintrittsabschnitt einen Riegelabschnitt und der geneigte Seitenrand liegt dem Riegelabschnitt gegenüber.

Der Winkel zwischen dem abgeschrägten Seitenrand und einer Parallelen zur Rotationsachse beträgt vorzugsweise etwa 30° bis 45°, kann bedarfsweise aber auch kleiner oder größer gewählt werden.

Nachfolgend wird ein Ausführungsbeispiel des Wechselhalters mit einem Bohrrohr eines Hohlbohrers unter Bezugnahme auf die Zeichnungen näher erläutert. Es zeigt:
- Fig. 1: in einer axialen Draufsicht einen Wechselhalter für Hohlbohrer, wobei zur Veranschaulichung drei Bohrrohre mit unterschiedlichen Durchmessern dargestellt sind;
- Fig. 2: in einer Schnittansicht entlang der in Fig. 1 eingezeichneten Schnittebene A - A den Wechselhalter mit den drei Bohrrohren;
- Fig. 3: in einer axialen Draufsicht eine Riegeleinrichtung des Wechselhalters;
- Fig. 4: in einer Schnittansicht entlang der in Fig. 3 eingezeichneten Schnittebene B - B die Riegeleinrichtung;
- Fig. 5: in einer Seitenansicht die in Fig. 3 dargestellte Riegeleinrichtung;
- Fig. 6: in einer Seitenansicht ein Bohrrohr mit einer am Basisende des Bohrrohres ausgebildeten Ausnehmung zum Eingriff für die Riegeleinrichtung;

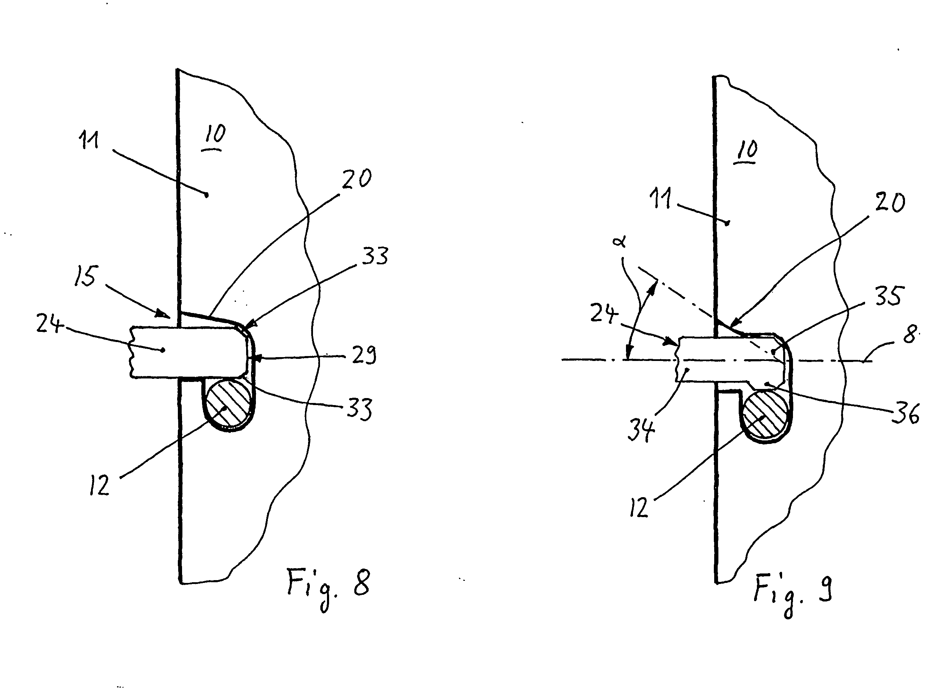

- Fig. 7: in einer axialen Draufsicht das Basisende des in Fig. 5 gezeigten Bohrrohres;
- Fig. 8: in einer Seitenansicht in vergrößerter Darstellung eine Ausnehmung am Basisende des Bohrrohres mit einer Halteeinrichtung und mit der Riegeleinrichtung in Riegeleingriff; und
- Fig. 9: in einer Ansicht gemäß Fig. 8 ein abgewandelt gebildeter Riegelzahn in Riegeleingriff.

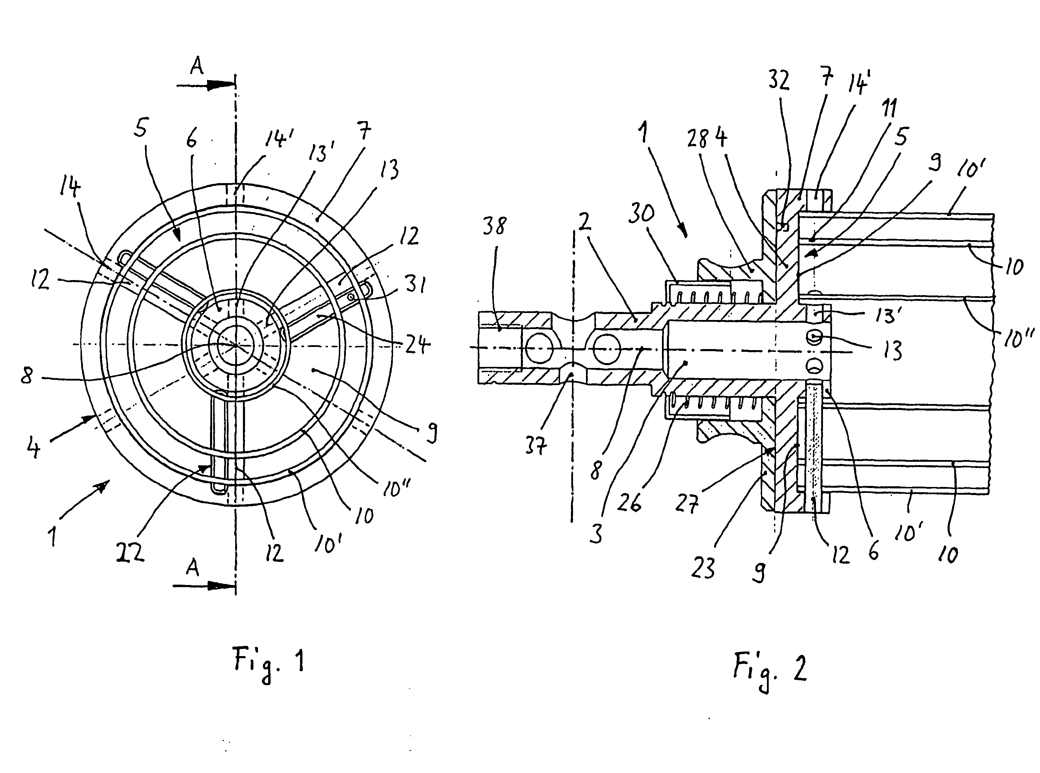

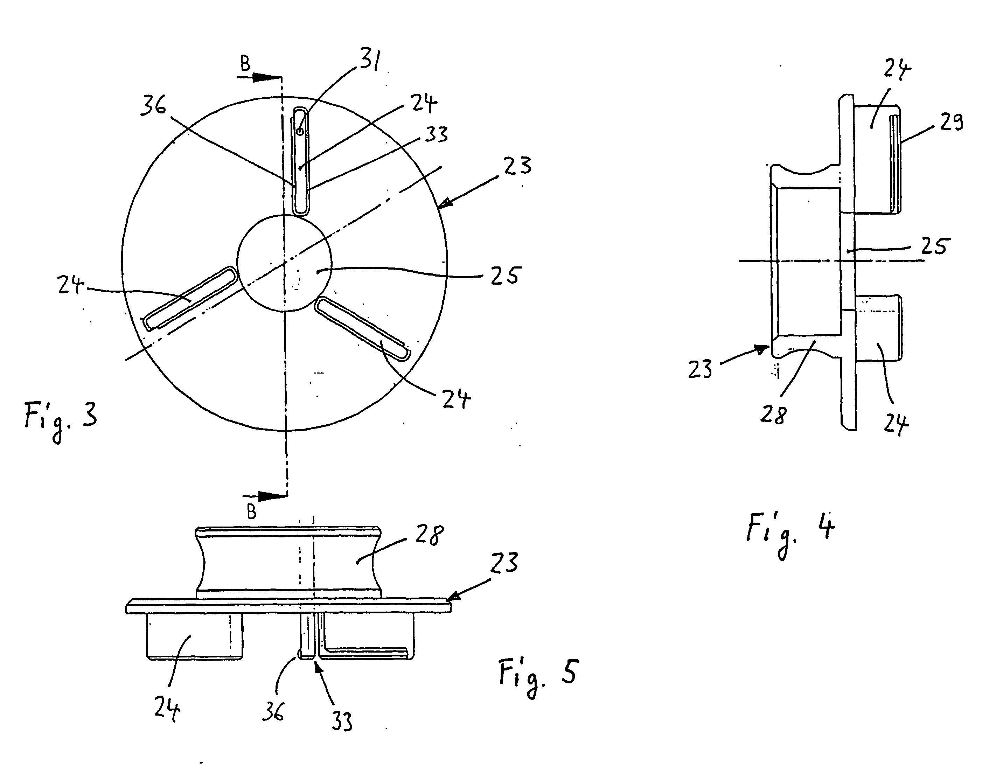

Ein Wechselhalter 1 für Hohlbohrer enthält eine Welle 2 (siehe Fig. 1 und 2) mit einer zentralen axialen Bohrung 3 und ein scheibenförmiges Trägerteil 4, das an der Welle 2 fest angebracht ist oder mit dieser einstückig gebildet ist. Das Trägerteil 4 weist eine in axialer Richtung gebildete ringförmige Vertiefung 5 auf, die radial innen von einem Vorderende 6 der Welle 2 und außen von einer umlaufenden Außenwand 7 begrenzt ist. Der Boden der Vertiefung 5 bildet eine ringförmige, zur Rotationsachse 8 des Wechselhalters 1 senkrechte, stirnseitige Anlagefläche 9, an der ein Bohrrohr 10 eines Hohlbohrers mit seinem einer Bohrkrone gegenüberliegenden Fuß- oder Basisende 11 axial anlegbar ist. Der Durchmesser eines an dem Wechselhalter 1 anbringbaren Bohrrohres 10 liegt im Bereich zwischen dem Innendurchmesser der Außenwand 7 und dem Außendurchmesser des Vorderendes 6 der Welle 2. Beispielhaft sind in den Fig. 1 und 2 zusätzlich zwei unterschiedliche Bohrrohre 10' und 10" dargestellt, von denen das Bohrrohr 10' einen maximal möglichen Durchmesser von beispielsweise 100 mm aufweist und an der Außenwand 7 anliegt, während das Bohrrohr 10" einen annähernd minimalen Durchmesser von beispielsweise 40 mm aufweist und das Vorderende 6 der Welle 2 mit geringem Spiel übergreift.

Der Wechselhalter 1 enthält drei eine Halteeinrichtung für das Bohrrohr 10 bildende Haltestifte 12, die bezüglich der Rotationsachse 8 radial ausgerichtet, über den Umfang voneinander gleichmäßig beabstandet angeordnet und in jeweiligen radialen Bohrungen 13 am Vorderende 6 der Welle 2 und in zugeordneten radialen Bohrungen 14 in der Außenwand 7 des Trägerteils 4 fest angebracht sind. Die drei Haltestifte 12 sind in einer zur Anlagefläche 9 parallelen Ebene und von der Anlagefläche 9 beabstandet angeordnet (siehe Fig. 2). Für jeden Haltestift 12 sind koaxial zu seinen Lagerbohrungen 13 und 14 in dem gegenüberliegenden Abschnitt des Trägerteils 4 Bohrungen 13' und 14' gebildet, durch die der Haltestift 12 mittels eines Dornes ausgeschlagen werden kann, falls er ersetzt werden müßte.

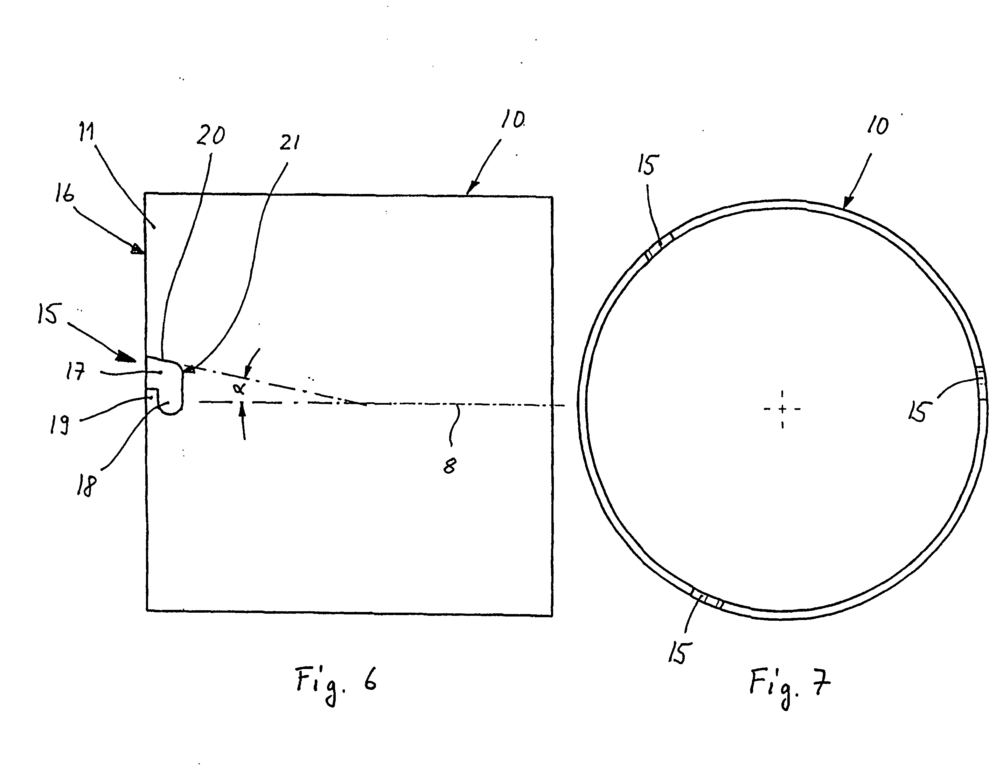

Das an dem Wechselhalter 1 anzubringende Bohrrohr 10 enthält an seinem Basisende 11 (siehe Fig. 6) drei Ausnehmungen 15, die über den Umfang des Bohrrohres 10 gleichmäßig beabstandet angeordnet sind. Jede Ausnehmung 15 enthält einen zur Stirnseite 16 des Basisendes 11 geöffneten Eintrittsabschnitt 17 und einen Riegelabschnitt 18, der sich vom Eintrittsabschnitt 17 als Hinterschneidung in Umfangsrichtung des Bohrrohres 10 erstreckt und einen Riegelvorsprung 19 in der Wand des Bohrrohres 10 bildet. Die Ausnehmungen 15 mit ihren Riegelabschnitten 18 und Riegelvorsprüngen 19 bilden zusammen mit den Haltestiften 12 eine Halteeinrichtung in der Art eines Bajonettverschlusses. Der Eintrittsabschnitt 17 ist durch einen in Draufsicht abgeschrägten Seitenrand 20, der dem Riegelabschnitt 18 gegenüberliegt, verjüngt gebildet, so daß er an der stirnseitigen Öffnung breiter ist wie an seinem innenliegenden Grund 21.

Das scheibenförmige Trägerteil 4 enthält an jedem Haltestift 12 eine schlitzförmige, durchgehende Öffnung 22, die in axialer Draufsicht versetzt neben dem Haltestift 12 und parallel zu diesem angeordnet ist, sich axial durch das scheibenförmige Trägerteil 4 erstreckt, innen zur Rotationsachse 8 hin bis zur Welle 2 und außen bis an oder in die Außenwand 7 reicht und sich somit über die ringförmige Anlagefläche 9 erstreckt. In jeder Öffnung 22 ist ein von einem Riegelträger 23 in axialer Richtung vorstehender Riegelzahn 24 verschiebbar aufgenommen. Der Riegelträger 23 ist scheibenförmig gebildet und mittels einer zentralen Lageröffnung 25 auf der Welle 2 verschiebbar angeordnet. Eine an der Welle 2 abgestützte Schraubenfeder 26 spannt den Riegelträger 23 gegen eine Rückseite 27 des Trägerteils 4 in Riegelstellung vor. Mittels eines ringförmigen Haltebundes 28 mit einer äußeren umlaufende Vertiefung zum manuellen Bedienen kann der Riegelträger 23 manuell gegen die Spannkraft der Schraubenfeder 26 aus der Riegelstellung gemäß Fig. 2 in eine Entriegelstellung verschoben werden, in der die Riegelzähne 24 zurückgezogen sind und ihre Stirnseiten 29 zumindest plan mit der ringförmigen Anlagefläche 9 oder von dieser zurückgesetzt angeordnet sind. Eine an der Welle 2 angebrachte topfartige Abdeckhülse 30 überdeckt die Schraubenfeder 26 und wird von dem Haltebund 28 des Riegelträgers 23 umgriffen.

Zum Anbringen und Festlegen eines Bohrrohres 10 an dem Wechselhalter 1 wird zunächst der Riegelträger 23 gegen die Kraft der Schraubenfeder 26 zurückgezogen, bis die Riegelzähne 24 aus den Öffnungen 22 in dem Trägerteil 4 vollständig herausgezogen sind. Der Riegelträger 23 kann nun gegenüber dem Trägerteil 4 verdreht werden, so daß die Riegelzähne 24 an der Rückseite 27 des Trägerteils 4 anliegen und der Riegelträger 23 in der Entriegelstellung gehalten ist. Ein von einer Stirnseite 29 eines der Riegelzähne 24 vorstehender Zapfen 31 kann dabei in eine zugeordnete Vertiefung 32 an der Rückseite 27 des Trägerteils 4 eingreifen, so daß der Riegelträger 23 in seiner Entriegelstellung gegen ungewolltes Verdrehen gesichert ist. Das zum Befestigen vorgesehene Bohrrohr 10 wird nun mit seinem Basisende 11 in einer solchen Stellung gegen die Anlagefläche 9 bewegt und daran angelegt, daß die Haltestifte 12 in die zugeordneten Ausnehmungen 15 eingeführt werden. Wenn das Bohrrohr 10 an der Anlagefläche 9 anliegt, wird es um seine Längsachse verdreht, bis alle Haltestifte 12 in den jeweiligen Riegelabschnitten 18 der Ausnehmungen 15 aufgenommen sind. Durch die drei um jeweils 120° versetzt angeordneten Haltestifte 12 erfolgt dabei eine Zentrierung des Bohrrohres 10 an dem Trägerteil 4. Anschließend wird der Riegelträger 23 aus seiner Raststellung verdreht, bis die Riegelzähne 23 vor den Öffnungen 22 angeordnet sind und sich gemeinsam mit dem von der Federkraft bewegten Riegelträger 23 durch diese hindurch bewegen. Jeder Riegelzahn 23 bewegt sich in den Eintrittsabschnitt 17 der Ausnehmung 15, wobei durch seine Abschrägungen 33 an der Stirnseite 29 und durch den abgeschrägten Seitenrand 20 das Einführen in den Eintrittsabschnitt 17 unterstützt wird. Der abgeschrägte Seitenrand 20 bewirkt des weiteren, daß das Bohrrohr 10 in seine korrekte Halte- und Riegelstellung bewegt wird, in der jeder Haltestift 12 vollständig in dem Riegelabschnitt 18 der Ausnehmung 15 aufgenommen ist, falls das Bohrrohr 10 nicht schon beim oben beschriebenen Anlegen an die Anlagefläche 9 in diese korrekte Position gebracht worden ist.

In der endgültigen Halte- und Riegelstellung (siehe Fig. 2 und 8) ist das Bohrrohr 10 von den Haltestiften 12 in der bajonettartigen Verriegelung gehalten und von den Riegelzähnen 24 gegen Verdrehen gesichert. An dem Bohrrohr 10 in Umfangsrichtung auftretende Bohrkräfte wirken derart, daß die Haltestifte 12 weiterhin in die Riegelabschnitte 18 gedrückt werden. Bei einer Rotation des Bohrrohres 10 entgegen der Bohrrichtung auftretende Umfangskräfte werden durch die Riegelzähne 24 abgestützt, so daß sich das Bohrrohr 10 aus seiner Festlegung am Trägerteil 4 weder lockern noch lösen kann.

Zum Abnehmen des Bohrrohres 10 werden in der oben beschriebenen Weise mittels des Riegelträgers 23 die Riegelzähne 24 aus ihrem Riegeleingriff in den Ausnehmungen 15 herausgezogen, so daß das Bohrrohr 10 gegenüber dem Trägerteil 4 und den Haltestiften 12 verdreht und vom Trägerteil 4 bzw. dem Wechselhalter 1 abgenommen werden kann.

Eine alternative Gestaltung der Riegelzähne 24 zeigt Fig. 9. Der Riegelzahn 24 enthält einen Schaft 34 mit reduzierter Dicke und einen Kopf 35 mit einer Wulst 36, die seitlich gegen den Haltestift 12 vorsteht und in Riegelstellung an diesem anliegt. Der Schaft 34 ist mit Spiel in der Öffnung 22 aufgenommen, wodurch vermieden wird, daß feines Bohrmaterial den Riegelzahn 24 in der Öffnung 22 festklemmt.

Bohrmaterial kann beispielsweise über ein an den Wechselhalter 1 angeschlossenes Sauggebläse entfernt werden, das das Bohrmaterial z. B. über Öffnungen 37 in der hohlen Welle 2 absaugen kann.

Der abgeschrägte Seitenrand 20 der Ausnehmung 15 ist entweder über die gesamte Tiefe des Eintrittsabschnitts 17 gebildet (siehe Fig. 6 und 8) oder er bildet nur eine vordere trichterartige Einführabschrägung der anschließend parallel zur Rotationsachse 8 bzw. der Längsachse des Bohrrohres 10 verlaufenden linken Seite des Eintrittsabschnitts 17 (siehe Fig. 9). Eine vergleichbare Abschrägung kann auch an der rechten Seite des Eintrittsabschnitts 17 gebildet sein, um eine Trichterwirkung beim Einführen des Riegelzahnes 24 zu verbessern.

Der Winkel α zwischen dem abgeschrägten Seitenrand 20 und einer Parallelen zur Rotationsachse 8 beträgt vorzugsweise etwa 30° bis 45°, kann bedarfsweise aber auch kleiner oder größer gewählt werden.

Der beschriebene Wechselhalter eignet sich für Hohlbohrer für unterschiedliche Materialien wie beispielsweise Beton, Ziegel, Holz oder Metall und kann mittels einer Anschlußeinrichtung 38, z. B. eines Schraubgewindes, an der Welle 2 an einer Bohrmaschine angebracht werden.

### Bezugszeichenliste

- 1: Wechselhalter
- 2: Welle
- 3: Bohrung
- 4: Trägerteil
- 5: Versteifung
- 6: Vorderende
- 7: Außenwand
- 8: Rotationsachse
- 9: Anlagefläche
- 10: Bohrrohr
- 11: Basisende
- 12: Haltestift
- 13: Bohrung
- 14: Bohrung
- 15: Ausnehmung
- 16: Stirnseite
- 17: Eintrittsabschnitt
- 18: Riegelabschnitt
- 19: Riegelvorsprung
- 20: Seitenrand
- 21: Grund
- 22: Öffnung
- 23: Riegelträger
- 24: Riegelzahn
- 25: Lageröffnung
- 26: Schraubenfeder
- 27: Rückseite
- 28: Haltebund
- 29: Stirnseite
- 30: Abdeckhülse
- 31: Zapfen
- 32: Vertiefung
- 33: Abschrägung
- 34: Schaft
- 35: Kopf
- 36: Wulst
- 37: Öffnung
- 38: Anschlußeinrichtung

## Patentansprüche

1. Wechselhalter für Hohlbohrer, enthaltend ein Trägerteil (4) zum stirnseitigen Aufnehmen eines Basisendes (11) eines Bohrrohres (10) des Hohlbohrers und eine Halteeinrichtung (12) für einen Halteeingriff des Trägerteils (4) an zugeordneten Ausnehmungen (15), die in der Wand des Bohrrohres (10) an seinem Basisende (11) ausgebildet sind,
**dadurch gekennzeichnet,**
**daß** das Trägerteil (4) einen stirnseitigen ringförmigen Anlagebereich (9) zum Aufnehmen von Bohrrohren (10; 10'; 10") mit unterschiedlichen Durchmessern aufweist und daß eine Riegeleinrichtung (24) vorgesehen ist, die zusammen mit der Halteeinrichtung (12) über die Breite des ringförmigen Anlagebereichs (9) wirksam ist, um das jeweilige an dem Anlagebereich (9) angelegte und von der Halteeinrichtung (12) gehaltene Bohrrohr (10; 10'; 10") in zentrierter Stellung verriegelt zu halten.

2. Wechselhalter nach Anspruch 1,
**dadurch gekennzeichnet, daß** die Halteeinrichtung zumindest zwei und insbesondere drei in etwa radial angeordnete Haltestifte (12) zum bajonettartigen Halteeingriff in den zugeordneten Ausnehmungen (15) am Basisende (11) des Bohrrohres (10; 10'; 10") aufweist.

3. Wechselhalter nach Anspruch 1 oder 2,
**dadurch gekennzeichnet, daß** die Riegeleinrichtung für jeden Haltestift einen bewegbaren Riegelzahn (24) aufweist und daß die Riegelzähne (24) zum Verriegeln des von den Haltestiften (12) gehaltenen Bohrrohres (10; 10'; 10") in die Ausnehmungen (15) ausfahrbar sind.

4. Wechselhalter nach Anspruch 3,
**dadurch gekennzeichnet, daß** jeder Riegelzahn (24), der sich in etwa über die freie Länge des Haltestiftes (12) erstreckt, durch eine in der Anlagefläche (9) des Trägerteils (4) gebildete schlitzförmige Öffnung (22) in axialer Richtung in eine an den Haltestift (12) angrenzende Position ausfahrbar ist.

5. Wechselhalter nach Anspruch 3 oder 4,
**dadurch gekennzeichnet, daß** der ringförmige Anlagebereich (9) bzw. die ringförmige stirnseitige Anlagefläche (9) des Trägerteils (4) von einer Außenbegrenzung (7) und einer Innenbegrenzung (6) begrenzt ist, die Haltestifte (12) jeweils an der Außenbegrenzung (7) und der Innenbegrenzung (6) gelagert sind und jeder Riegelzahn (24) in einer zu seinem Haltestift (12) parallel versetzten Anordnung sich in etwa über die freie Länge des Haltestiftes (12) erstreckt.

6. Wechselhalter nach einem der Ansprüche 1 bis 5,
**dadurch gekennzeichnet, daß** ein auf einer zentralen Welle (2) des Trägerteils (4) axial verschiebbar gelagerter Riegelträger (23) die Riegeleinrichtung bzw. die axial vorstehenden Riegelzähne (24) enthält.

7. Wechselhalter nach Anspruch 6,
**dadurch gekennzeichnet, daß** der Riegelträger (23) gegen das Trägerteil (4) in Riegelstellung elastisch vorgespannt ist.

8. Wechselhalter nach einem der Ansprüche 3 bis 7,
**dadurch gekennzeichnet, daß** jeder Riegelzahn (24) zu seiner Stirnseite (29) hin abgerundet oder abgeschrägt ist.

9. Wechselhalter nach einem der Ansprüche 3 bis 8,
**dadurch gekennzeichnet, daß** jede Ausnehmung (15) am Bohrrohr (10) einen Eintrittsabschnitt (17) für den Haltestift (12) und den Riegelzahn (24) aufweist und daß der Eintrittsabschnitt (17) zumindest einen zur Bewegungsrichtung des Riegelzahnes (24) geneigten Seitenrand (20) aufweist.

10. Wechselhalter nach einem der Ansprüche 2 bis 9,
**dadurch gekennzeichnet, daß** jeder Haltestift (12) in dem Trägerteil (4) bzw. in der Innenbegrenzung (6) und in der Außenbegrenzung (7) in zugeordneten Bohrungen (13 bzw. 14) aufgenommen ist.

11. Wechselhalter nach Anspruch 10,
**dadurch gekennzeichnet, daß** für jeden Haltestift (12) koaxiale Durchgangsbohrungen (13', 14') in einem gegenüberliegenden Abschnitt des Trägerteils (4) gebildet sind.

12. Wechselhalter nach einem der Ansprüche 1 bis 11,
**dadurch gekennzeichnet, daß** eine Rasteinrichtung (31, 32) zum Festlegen des geöffneten Riegelträgers an dem Trägerteil (4) in einer Raststellung vorgesehen ist.

13. Wechselhalter nach einem der Ansprüche 1 bis 12,
**dadurch gekennzeichnet, daß** die Welle (2) einen Anschluß (38) für eine Antriebseinrichtung, insbesondere eine Bohrmaschine, aufweist.

14. Wechselhalter nach einem der Ansprüche 1 bis 13,
**dadurch gekennzeichnet, daß** die Welle (2) hohl gebildet ist und einen Absauganschluß (37) aufweist.

15. Hohlbohrer zum Festlegen an einem Wechselhalter, wobei ein Bohrrohr des Hohlbohrers an einem einer Bohrspitze gegenüberliegenden Basisende Ausnehmungen zum Herstellen eines bajonettartigen Halteeingriffs mit einer Halteeinrichtung des Wechselhalters aufweist und jede Ausnehmung einen Eintrittsabschnitt für die Halteeinrichtung aufweist,
**dadurch gekennzeichnet,**
**daß** der Eintrittsabschnitt (17) zumindest einen zur Rotationsachse (8) geneigten Seitenrand (20) aufweist.

16. Hohlbohrer nach Anspruch 15,
**dadurch gekennzeichnet, daß** der geneigte Seitenrand (20) abgeschrägt und/oder abgerundet ist.

17. Hohlbohrer nach Anspruch 15 oder 16,
**dadurch gekennzeichnet, daß** der Eintrittsabschnitt (17) einen Riegelabschnitt (18) aufweist und der geneigte Seitenrand (20) dem Riegelabschnitt (18) gegenüberliegt.

## Claims

1. Interchangeable holder for hollow drills, containing a carrier part (4) for accommodating at the end a base end (11) of a drill tube (10) of the hollow drill, and a holding device (12) for retaining engagement of the carrier part (4) on associated recesses (15) which are formed in the wall of the drill tube (10) at its base end (11), **characterized in that**
the carrier part (4) has an end annular contact area (9) for accommodating drill tubes (10; 10', 10") with different diameters and **in that** there is a locking device (24) which, together with the holding device (12), is active over the width of the annular contact area (9) in order to keep locked in the centred position the drill tube (10; 10'; 10'') which has been placed against the contact area (9) and is held by the holding device (12).

2. Interchangeable holder according to Claim 1, **characterized in that** the holding device has at least two and especially three approximately radially arranged holding pins (12) for bayonet-like retaining engagement in the associated recesses (15) on the base end (11) of the drill tube (10; 10', 10").

3. Interchangeable holder according to Claim 1 or 2, **characterized in that** the locking device for each holding pin contains a movable locking tooth (24), and **in that** the locking teeth (24) for locking the drill tube (10; 10', 10'') which is held by the holding pins (12) can be extended out into the recesses (15).

4. Interchangeable holder according to Claim 3, **characterized in that** each locking tooth (24), which extends roughly over the free length of the holding pin (12), can be extended through a slotted opening (22), which has been formed in the contact surface (9) of the carrier part (4), in the axial direction into a position which adjoins the holding pin (12).

5. Interchangeable holder according to Claim 3 or 4, **characterized in that** the annular contact area (9) or the annular end contact surface (9) of the carrier part (4) is bounded by an outer boundary (7) and an inner boundary (6), the holding pins (12) are each supported on the outer boundary (7) and the inner boundary (6) and each locking tooth (24) extends in an arrangement which is offset parallel to its holding pin (12), approximately over the free length of the holding pin (12).

6. Interchangeable holder according to one of Claims 1 to 5, **characterized in that** a locking carrier (23) which is supported such that it can be displaced axially on a central shaft (2) of the carrier part (4) contains the locking device or the axially projecting locking teeth (24).

7. Interchangeable holder according to Claim 6, **characterized in that** the locking carrier (23) is prestressed elastically against the carrier part (4) in the locked position.

8. Interchangeable holder according to one of Claims 3 to 7, **characterized in that** each locking tooth (24) is rounded or bevelled towards its end face (29).

9. Interchangeable holder according to one of Claims 3 to 8, **characterized in that** each recess (15) on the drill tube (10) has an entry section (17) for the holding pin (12) and the locking tooth (24), and **in that** the entry section (17) has at least one side edge (20) which is inclined with respect to the direction of motion of the locking tooth (24).

10. Interchangeable holder according to one of Claims 2 to 9, **characterized in that** each holding pin (12) is held stationary in the carrier part (4) or in the inner boundary (6) and in the outer boundary (7) in associated holes (13 and 14).

11. Interchangeable holder according to Claim 10, **characterized in that**, for each holding pin (12), coaxial through holes (13', 14') are formed in an opposite section of the carrier part (4).

12. Interchangeable holder according to one of Claims 1 to 11, **characterized in that** there is a latching device (31, 32) for fixing the opened locking carrier on the carrier part (4) in a latched position.

13. Interchangeable holder according to one of Claims 1 to 12, **characterized in that** the shaft (2) has a connection (38) for a drive device, especially a drilling machine.

14. Interchangeable holder according to one of Claims 1 to 13, **characterized in that** the shaft (2) is hollow and has a suction connection (37).

15. Hollow drill for fixing to an interchangeable holder, a drill tube of the hollow drill having on a base end opposite a drill tip recesses for producing bayonet-like retaining engagement to a holding device of the interchangeable holder and each recess having an entry section for the holding device, **characterized in that** the entry section (17) has at least one side edge (20) inclined with respect to the axis (8) of rotation.

16. Hollow drill according to Claim 15, **characterized in that** the inclined side edge (20) is bevelled and/or rounded.

17. Hollow drill according to Claim 15 or 16, **characterized in that** the entry section (17) contains a locking section (18) and the inclined side edge (20) is opposite the locking section (18).

## Revendications

1. Support variable pour mèches creuses, comprenant une pièce de support (4) en vue de la réception frontale d'une extrémité de base (11) d'un tube de perçage (10) de la mèche creuse, et un dispositif de retenue (12) destiné à une poignée de maintien de la pièce de support (4), sur des évidements associés (15) pratiqués dans la paroi du tube de perçage (10), à son extrémité de base (11),
**caractérisé par le fait**
**que** la pièce de support (4) comporte une zone annulaire frontale de contact (9) afin de recevoir des tubes de perçage (10 ; 10' ; 10") de diamètres différents ; et par le fait qu'il est prévu un dispositif de verrouillage (24) agissant conjointement au dispositif de retenue (12), sur la largeur de la zone annulaire de contact (9), pour maintenir verrouillé, en position centrée, le tube de perçage considéré (10 ; 10' ; 10") appliqué contre ladite zone de contact (9) et retenu par ledit dispositif de retenue (12).

2. Support variable selon la revendication 1,
**caractérisé par le fait que** le dispositif de retenue comporte au moins deux, et notamment trois barrettes de retenue (12) agencées à peu près radialement en vue d'une interaction, du type baïonnette, avec les évidements associés (15) situés à l'extrémité de base (11) du tube de perçage (10 ; 10' ; 10").

3. Support variable selon la revendication 1 ou 2,
**caractérisé par le fait que** le dispositif de verrouillage présente une dent mobile de verrouillage (24) pour chaque barrette de retenue ; et **par le fait que** les dents de verrouillage (24) peuvent être déployées pour pénétrer dans les évidements (15), afin de verrouiller le tube de perçage (10 ; 10' ; 10") retenu par les barrettes de retenue (12).

4. Support variable selon la revendication 3,
**caractérisé par le fait que** chaque dent de verrouillage (24), s'étendant sensiblement sur la longueur libre de la barrette de retenue (12), peut être déployée dans la direction axiale, à travers un orifice (22) en forme de fente pratiqué dans la surface de contact (9) de la pièce de support (4), jusqu'à une position adjacente à ladite barrette de retenue (12).

5. Support variable selon la revendication 3 ou 4,
**caractérisé par le fait que** la zone annulaire de contact (9) ou la surface annulaire frontale de contact (9) de la pièce de support (4) est délimitée, respectivement, par une délimitation extérieure (7) et par une délimitation intérieure (6) ; les barrettes de retenue (12) sont respectivement montées sur la délimitation extérieure (7) et sur la délimitation intérieure (6) ; et chaque dent de verrouillage (24) s'étend sensiblement sur la longueur libre de la barrette de retenue (12), selon une disposition décalée parallèlement vis-à-vis de sa barrette de retenue (12).

6. Support variable selon l'une des revendications 1 à 5,
**caractérisé par le fait qu'**un porte-verrou (23), monté à coulissement axial sur un arbre central (2) de la pièce de support (4), renferme respectivement le dispositif de verrouillage ou les dents de verrouillage (24) saillant axialement.

7. Support variable selon la revendication 6,
**caractérisé par le fait que** le porte-verrou (23) est précontraint élastiquement contre la pièce de support (4), vers une position verrouillée.

8. Support variable selon l'une des revendications 3 à 7,
**caractérisé par le fait que** chaque dent de verrouillage (24) est arrondie ou biseautée en direction de sa face extrême (29).

9. Support variable selon l'une des revendications 3 à 8,
**caractérisé par le fait que** chaque évidement (15), situé sur le tube de perçage (10), comporte un segment de pénétration (17) destiné à la barrette de retenue (12) et à la dent de retenue (24) ; et **par le fait que** ledit segment de pénétration (17) possède au moins un bord latéral (20) incliné vis-à-vis de la direction de mouvement de ladite dent de verrouillage (24).

10. Support variable selon l'une des revendications 2 à 9,
**caractérisé par le fait que** chaque barrette de retenue (12) est respectivement logée dans la pièce de support (4), ou dans la délimitation intérieure (6) et la délimitation extérieure (7), dans des trous associés (13, respectivement 14).

11. Support variable selon la revendication 10,
**caractérisé par le fait que** des trous coaxiaux de passage (13', 14') sont pratiqués, pour chaque barrette de retenue (12), dans un segment opposé de la pièce de support (4).

12. Support variable selon l'une des revendications 1 à 11,
**caractérisé par le fait qu'**un dispositif d'encliquetage (31, 32) est prévu pour la consignation à demeure du porte-verrou ouvert, sur la pièce de support (4), dans une position encliquetée.

13. Support variable selon l'une des revendications 1 à 12,
**caractérisé par le fait que** l'arbre (2) comporte un raccord (38) affecté à un système d'entraînement, notamment à une perceuse.

14. Support variable selon l'une des revendications 1 à 13,
**caractérisé par le fait que** l'arbre (2) possède une forme creuse et présente un raccord d'aspiration (37).

15. Mèche creuse conçue pour être consignée à demeure sur un support variable, un tube de perçage de ladite mèche creuse présentant, à une extrémité de base tournée à l'opposé d'une pointe de perçage, des évidements destinés à instaurer une interaction du type baïonnette avec un dispositif de retenue du support variable, et chaque évidement étant muni d'un segment de pénétration destiné audit dispositif de retenue,
**caractérisée par le fait**
**que** ledit segment de pénétration (17) possède au moins un bord latéral (20) incliné vis-à-vis de l'axe de rotation (8).

16. Mèche creuse selon la revendication 15,
**caractérisée par le fait que** le bord latéral incliné (20) est biseauté et/ou arrondi.

17. Mèche creuse selon la revendication 15 ou 16,
**caractérisée par le fait que** le segment de pénétration (17) comporte un segment de verrouillage (18), et le bord latéral incliné (20) est situé en vis-à-vis dudit segment de verrouillage (18).
